# EUROPÄISCHE PATENTANMELDUNG

(11) **EP 4 553 359 A1**
(43) Veröffentlichungstag der Anmeldung: **14.05.2025**
(21) Anmeldenummer: 24195237.3
(22) Anmeldetag: 19.08.2024
(51) Int. Cl.: F16K 31/50, F16K 37/00

(54) **ANTRIEBSSTANGE, PROZESSARMATUR-ANTRIEB, PROZESSARMATUR, UND VERFAHREN ZUM BETREIBEN DER PROZESSARMATUR**

(30) Priorität: 08.11.2023 DE 102023130987
(71) Anmelder: Gemü Gebr. Müller Apparatebau GmbH & Co. Kommanditgesellschaft, 74653 Ingelfingen (DE)
(72) Erfinder: Magej, Johann, 74523 Schwäbisch Hall (DE)
(74) Vertreter: DREISS Patentanwälte PartG mbB

(57) **Zusammenfassung**

Es wird eine Antriebsstange (10) für einen Prozessarmatur-Antrieb (300) bereitgestellt. Die Antriebsstange (10) umfasst wenigstens einen ersten Abschnitt (100) umfassend eine Antriebsschnittstelle (130), mittels welcher wenigsten ein Teil einer von dem Prozessarmatur-Antrieb (300) ausgehenden Antriebskraft in die Antriebsstange (10) zu deren Bewegung entlang einer Stellachse (S) einbringbar ist, und umfassend eine erste Verbindungsschnittstelle (110); und wenigstens einen zweiten Abschnitt (200) umfassend eine zweite Verbindungsschnittstelle (210), wobei die zweite Verbindungsschnittstelle (210) gemeinsam mit der ersten Verbindungsschnittstelle (110) zur starren Befestigung des wenigstens einen zweiten Abschnitts (200) an dem ersten Abschnitt (100) eingerichtet ist, und wobei der zweite Abschnitt (200) wenigstens einen Sensor (400) umfasst, welcher dazu eingerichtet ist, ein Signal (S_400) zu erzeugen, welches eine auf den zweiten Abschnitt (200) entlang der Stellachse (S) wirkende Kraft charakterisiert.

## Beschreibung

Die Erfindung betrifft eine Antriebsstange für einen Prozessarmatur-Antrieb, den Prozessarmatur-Antrieb, eine Prozessarmatur und ein Verfahren zum Betreiben der Prozessarmatur.

Die Probleme des Standes der Technik werden durch eine Antriebsstange, einen Prozessarmatur-Antrieb, eine Prozessarmatur sowie ein Verfahren zum Betreiben der Prozessarmatur gemäß den jeweiligen unabhängigen oder abhängigen Ansprüchen gelöst.

Ein erster Aspekt der Beschreibung betrifft eine Antriebsstange für einen Prozessarmatur-Antrieb. Die Antriebsstange umfasst: Wenigstens einen ersten Abschnitt umfassend eine Antriebsschnittstelle, mittels welcher wenigstens ein Teil einer von dem Prozessarmatur-Antrieb ausgehenden Antriebskraft in die Antriebsstange zu deren Bewegung entlang einer Stellachse einbringbar ist, und umfassend eine erste Verbindungsschnittstelle; und wenigstens einen zweiten Abschnitt umfassend eine zweite Verbindungsschnittstelle, wobei die zweite Verbindungsschnittstelle gemeinsam mit der ersten Verbindungsschnittstelle zur starren Befestigung des wenigstens einen zweiten Abschnitts an dem wenigstens einen ersten Abschnitt eingerichtet ist, und wobei der wenigstens eine zweite Abschnitt wenigstens einen Sensor umfasst, welcher dazu eingerichtet ist, ein Signal zu erzeugen, welches eine auf den wenigstens einen zweiten Abschnitt entlang der Stellachse wirkende Kraft charakterisiert.

Durch den ersten und zweiten Abschnitt werden wenigstens zwei Bauteile bereitgestellt, die gemeinsam und starr miteinander verbunden die Antriebsstange bilden. Durch diese modulare Aufteilung der Antriebsstange in die beiden Abschnitte ist es möglich, dass antriebsspezifische Anpassungen der Antriebsschnittstelle unabhängig von der Ausprägung des zweiten Abschnitts durchgeführt werden können. Folglich wird es möglich, baugleiche zweite Abschnitte für in Bezug zu der Antriebsschnittstelle unterschiedlich ausgebildete erste Abschnitte zu verwenden. Dadurch ergeben sich Freiheitsgrade für die Gestaltung der Antriebsschnittstelle. Beispielsweise können im Falle eines Gewindetriebes unterschiedliche

Gewindesteigungen vorgesehen werden, um die Auslegung der jeweiligen Antriebe anzupassen. Im Falle von Pneumatikantrieben kann die Anordnung eines Antriebskolbens unabhängig von der Gestaltung des Sensors vorgenommen werden. Vorteilhaft können also unterschiedliche Antriebskonzepte wie beispielsweise ein Elektroantrieb und ein pneumatischer Antrieb auf das gleiche modulare Baukastensystem mit nur einer oder wenigen unterschiedlichen Ausprägungen des zweiten Abschnitts zurückgreifen. Weitergehend können auch Ventilantriebe mit dem wenigsten einen Sensor aufweisenden Abschnitt nachgerüstet werden, wenn dieser noch nicht vorhanden ist. Zudem ist ein einfacher Tausch des zweiten Abschnitts möglich, ohne die übrigen Teile des Antriebs zu demontieren.

Weitergehend ermöglicht diese präzise Kraftrückmeldung aus dem Kern der Antriebsstange eine gewünschte Antriebsregelung. Da die Ist-Kraft bekannt ist, kann eine je nach Betriebszustand gewünschte Öffnungs- oder Schließkraft vorgegeben werden, um den Antrieb entsprechend anzusteuern. Weitergehend kann mit einer Stellungsrückmeldung die Kraftregelung noch weiter präzisiert werden, um beispielsweise in bestimmten Positionen, beispielsweise der Schließposition, eine erhöhte Kraft in die Antriebsstange und damit auch den Absperrkörper einzuleiten.

Alternativ oder zusätzlich wird die Überwachung der Armatur verbessert. So wird es möglich, in bestimmten Betriebszuständen nur eine gewisse Maximalkraft zuzulassen. Beispielweise indiziert eine erhöhte Kraft beim Schließvorgang, dass ein Fremdkörper in der Armatur vorhanden ist. Weitergehend können im geöffneten stationären Zustand Kraftspitzen auf Druckschläge an andere Stelle der Prozessanlage rückschließen lassen.

Ein vorteilhaftes Beispiel zeichnet sich dadurch aus, dass der zweite Abschnitt der Antriebsstange eine dritte Verbindungsschnittstelle umfasst, welche zur kraftführenden Verbindung des zweiten Abschnitts mit einem Absperrmittel der Prozessarmatur, mit einem Kompressor bzw. Druckstück der Prozessarmatur oder mit einem weiteren Abschnitt der Antriebsstange eingerichtet ist, wobei der Sensor im Kraftweg zwischen der zweiten Verbindungsschnittstelle und der dritten Verbindungsschnittstelle angeordnet ist.

Vorteilhaft können damit diejenigen Kräfte gemessen werden, die zwischen der Antriebsschnittstelle und der dritten Verbindungsschnittstelle auftreten.

Ein vorteilhaftes Beispiel zeichnet sich dadurch aus, dass der zweite Abschnitt in seinem Verlauf eine Materialverjüngung aufweist, wobei der wenigstens eine Sensor im Bereich der Materialverjüngung angeordnet ist.

Die in den zweiten Abschnitt entweder von Antriebsseite oder von der Seite des Absperrkörpers eingebrachten Kräfte führen zu Materialverspannungen des zweiten Abschnitts. Vorteilhaft bewirkt die Materialverjüngung, dass die vorgenannten Verspannungen so konzentriert werden, dass sie sensormäßig besser erfasst werden können.

Ein vorteilhaftes Beispiel zeichnet sich dadurch aus, dass der zweite Abschnitt zumindest abschnittsweise, insbesondere im Bereich der Materialverjüngung, einen Nutengrund umfasst, wobei der Sensor auf dem Nutengrund angeordnet ist.

Vorteilhaft wird zum einen der zweite Abschnitt verjüngt aber stabil ausgestaltet. Zum anderen kann die Kraft gezielt in den Sensor eingeleitet werden, wozu insbesondere die symmetrische Ausgestaltung mit Nutengrund und umgebenden Seitenleisten beiträgt.

Ein vorteilhaftes Beispiel zeichnet sich dadurch aus, dass wenigstens eine Signalleitung, welche den wenigstens einen Sensor elektrisch kontaktiert und an einer distalen Öffnung des ersten Abschnitts herausgeführt ist, abschnittsweise innerhalb einer ersten Durchgangsöffnung des ersten Abschnitts und abschnittsweise innerhalb einer zweiten Durchgangsöffnung des zweiten Abschnitts angeordnet ist

Vorteilhaft kann so auf einfache Art und Weise die Signalleitung nach außen geführt werden.

Ein vorteilhaftes Beispiel zeichnet sich dadurch aus, dass die zweite Durchgangsöffnung des zweiten Abschnitts in Bezug zur Stellachse radial innerhalb der zweiten Verbindungsschnittstelle angeordnet ist.

Vorteilhaft verhilft die kollineare Anordnung der zweiten Verbindungsschnittstelle und der zweiten Durchgangsöffnung zu einer Kompaktierung des Antriebs in der Höhe bzw. entlang der Stellachse.

Ein vorteilhaftes Beispiel zeichnet sich dadurch aus, dass die erste Verbindungsschnittstelle des ersten Abschnitts in Bezug zur Stellachse radial innerhalb der Antriebsschnittstelle angeordnet ist.

Vorteilhaft verhilft die kollineare Anordnung der ersten Verbindungsschnittstelle und der Antriebsschnittstelle zu einer Kompaktierung des Antriebs in der Höhe bzw. entlang der Stellachse.

Ein vorteilhaftes Beispiel zeichnet sich dadurch aus, dass der wenigstens einen Sensor in einem Raum angeordnet ist, der ausgehend vom wenigstens einen Sensor und wegweisend vom ersten Abschnitt fluiddicht ausgebildet ist.

Vorteilhaft wird somit das Eindringen von Prozessfluid in den Bereich des Sensors wirksam verhindert.

Ein vorteilhaftes Beispiel zeichnet sich dadurch aus, dass die starre Verbindung zwischen der ersten Verbindungsschnittstelle und der zweiten Verbindungsschnittstelle lösbar ist.

Durch die vorgeschlagene Modularität und die Lösbarkeit der Verbindung ergeben sich Vorteile bei der Wartung und dem Ressourcenverbrauch. Antriebe unterliegen einer gewissen Alterung, was sich insbesondere im Bereich der Antriebsschnittstelle der Antriebsstangen niederschlägt. Bei einem Tausch des ersten Abschnitts kann der zweite zuvor verbaute Abschnitt erhalten bleiben. Gleiches gilt auch andersherum, also beim Tausch des zweiten Abschnitts. Folglich wird der Ressourcenverbrauch gesenkt.

Ein vorteilhaftes Beispiel zeichnet sich dadurch aus, dass der zweite Abschnitt abschnittsweise in dem ersten Abschnitt aufgenommen ist.

Vorteilhaft kann ein rein sequentieller Aufbau der Antriebsstange verhindert und Bauhöhe des Ventilantriebs reduziert werden.

Ein vorteilhaftes Beispiel zeichnet sich dadurch aus, dass die erste Verbindungsschnittstelle des ersten Abschnitts zwischen der Antriebsschnittstelle des ersten Abschnitts und der zweiten Verbindungsschnittstelle des zweiten Abschnitts angeordnet ist.

Damit umgibt die Antriebsschnittstelle die beiden Verbindungsschnittstellen und ermöglicht eine kompakte Ausführung der Armatur.

Ein vorteilhaftes Beispiel zeichnet sich dadurch aus, dass der Prozessarmatur-Antrieb gemäß einem zweiten Aspekt der Beschreibung eine zur Antriebsstange rotierbare Mutter umfasst, wobei die Antriebsschnittstelle und die Mutter gemeinsame Laufrillen für Kugeln definieren, wobei wenigstens ein Rückführkanal für die Kugeln innerhalb der rotierbaren Mutter ausgeführt ist.

Vorteilhaft wird so ein Kugelgewindetrieb mit einer Kraftmessung im Bereich der Antriebsstange bereitgestellt.

Alternativ zu dem vorgeschlagenen Kugelgewindetrieb kann auch ein Trapezgewindetrieb oder beliebiger Gewindetrieb verwendet werden, um die Antriebskraft vom Prozessarmatur-Antrieb in die Antriebsstange einzukoppeln.

Ein vorteilhaftes Beispiel zeichnet sich dadurch aus, dass die rotierbare Mutter Teil eines Rotors eines Elektromotors ist, wobei der Rotor zwischen der Antriebsstange und einem Stator des Elektromotors angeordnet ist.

Ein dritter Aspekt der Beschreibung betrifft die Prozessarmatur selbst.

Ein vierter Aspekt der Beschreibung betrifft ein Verfahren zum Betreiben der Prozessarmatur gemäß dem dritten Aspekt, wobei das Verfahren umfasst: Ermitteln eines Ansteuersignals in Abhängigkeit von dem wenigstens einen Signal, welches die auf den zweiten Abschnitt entlang der Stellachse wirkende Kraft charakterisiert, und in Abhängigkeit von wenigstens einem vorgegebenen Soll-Wert, insbesondere einem Soll-Wert für die Kraft auf den wenigstens zweiten Abschnitt; Betreiben des Prozessarmatur-Antriebs in Abhängigkeit von dem ermittelten Ansteuersignal.

In der Zeichnung zeigen:
Figur 1 eine schematisch dargestellte Prozessarmatur;
Figur 2 eine Antriebsstange für die Prozessarmatur in einer perspektivischen Schnittdarstellung;
Figur 3 einen zweiten Abschnitt der Antriebsstange in einer Seitenansicht;

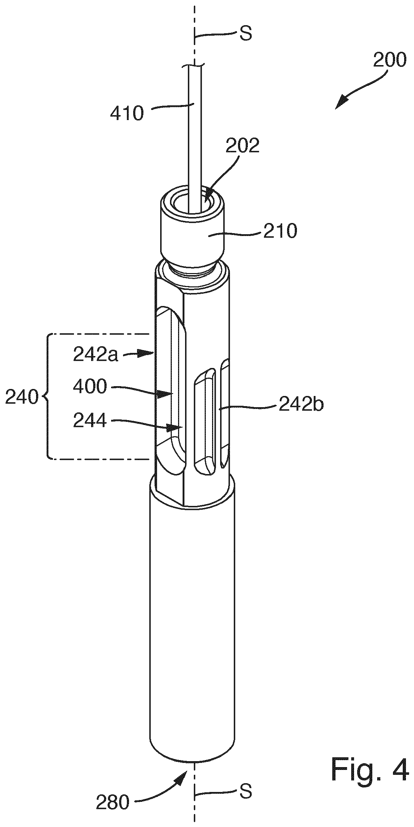

Figur 4 den zweiten Abschnitt in einer perspektivischen Darstellung; und
Figur 5 einen Prozessarmatur-Antrieb in einer Schnittdarstellung.

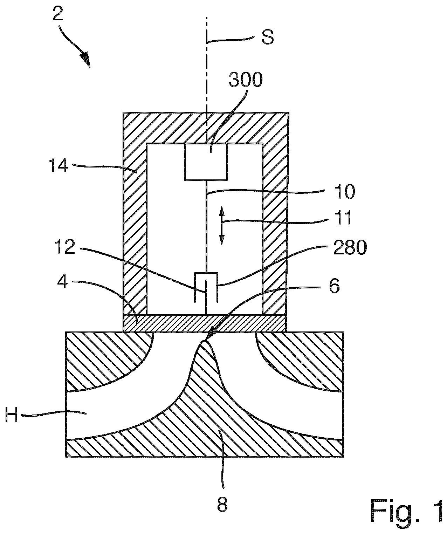

Figur 1 zeigt eine schematisch dargestellte Prozessarmatur 2 in einem Schnitt, in welchem eine Stellachse S der Prozessarmatur 2 liegt. Die Prozessarmatur 2 umfasst einen Absperrkörper 4, welcher mittels eines Prozessarmatur-Antriebs 300 auf einen Ventilsitz 6 eines Ventilkörpers 8 aufdrückbar und von dem Ventilsitz 6 weg bewegbar ist. Zur Bewegung des Absperrkörpers 4 ist der Absperrkörper 4 mittels einer Antriebsstange 10 mit dem Prozessarmatur-Antrieb 300 verbunden. Der Prozessarmatur-Antrieb 300 leitet eine eine Kraft in die Antriebsstange 10 ein, um diese entlang der Stellachse S gemäß dem Doppelpfeil 11 zu bewegen. Die Antriebsstange 10 umfasst eine Verbindungsschnittstelle 280, um den Absperrkörper 4 kraftführend mit der Antriebsstange 10 zu verbinden.

Die Prozessarmatur 2 ist vorliegend als Membranventil ausgebildet. Beispielsweise ragt von dem als Ventilmembran ausgebildeten Absperrkörper 4 ein Membranstift 12 ab, welcher über die Verbindungsschnittstelle 280 mit der Antriebsstange 10 kraftführend verbunden ist. Der Prozessarmatur-Antrieb 300 umfasst ein Gehäuse 14, wobei die Ventilmembran zwischen dem Gehäuse 14 und dem Ventilkörper 8 verspannt ist. Selbstverständlich kann auch jedwede andere Art von Prozessarmatur 2 wie ein Sitzventil, ein Regelventil, etc. insbesondere auch eine Absperrklappe mit der beschriebenen Antriebsstange 10 ausgerüstet werden. Der vorangehende Absatz ist deshalb auch auf andere Armaturarten als das dargestellte Membranventil übertragbar.

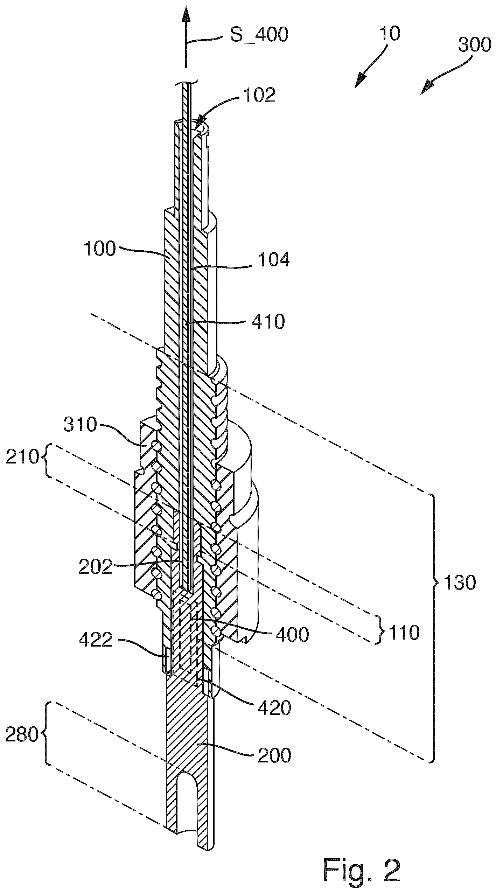

Figur 2 zeigt die Antriebsstange 10 für die Prozessarmatur in einer perspektivischen Schnittdarstellung. Die Antriebsstange 10 für den Prozessarmatur-Antrieb 300 umfasst wenigstens einen ersten Abschnitt 100 umfassend eine Antriebsschnittstelle 130, mittels welcher wenigstens ein Teil einer von dem Prozessarmatur-Antrieb 300 ausgehenden Antriebskraftin die Antriebsstange 10 zu deren Bewegung entlang einer Stellachse S einbringbar ist. Die Antriebsstange umfasst eine erste Verbindungsschnittstelle 110. Die Antriebsstange 10 umfasst wenigstens einen zweiten Abschnitt 200 umfassend eine zweite Verbindungsschnittstelle 210, wobei die zweite Verbindungsschnittstelle 210 gemeinsam mit der ersten Verbindungsschnittstelle 110 zur starren Befestigung des wenigstens einen zweiten Abschnitts 200 an dem wenigstens einen ersten Abschnitt 100 eingerichtet ist, und wobei der wenigstens eine zweite Abschnitt 200 wenigstens einen Sensor 400 umfasst, welcher dazu eingerichtet ist, ein Signal S_400 zu erzeugen, welches eine auf den wenigstens einen zweiten Abschnitt 200 entlang der Stellachse S wirkende Kraft charakterisiert.

Der zweite Abschnitt 200 der Antriebsstange 10 umfasst die dritte Verbindungsschnittstelle 280, welche zur kraftführenden Verbindung des zweiten Abschnitts 200 mit einem Absperrmittel 4 der Prozessarmatur 2, mit einem Kompressor bzw. Druckstück der Prozessarmatur 2 oder mit einem weiteren Abschnitt der Antriebsstange 10 eingerichtet ist, wobei der Sensor 400 im Kraftweg zwischen der zweiten Verbindungsschnittstelle 210 und der dritten Verbindungsschnittstelle 280 angeordnet ist.

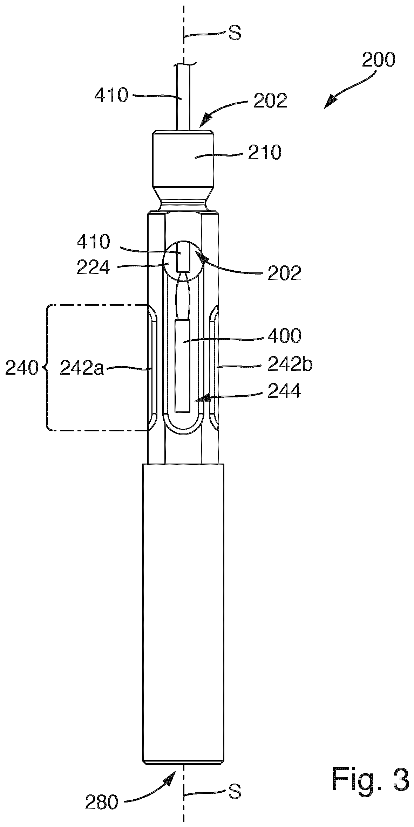

Der wenigstens eine Sensor 400 ist in einem Raum 420 angeordnet, der ausgehend vom wenigstens einen Sensor 400 und wegweisend vom ersten Abschnitt 400 fluiddicht ausgebildet ist. Der wenigstens eine Sensor 400 ist beispielsweise im Bereich einer Materialverjüngung angeordnet, um den Messbereich anzupassen, siehe Figur 3. Alternativ kann die Materialverjüngung, beispielsweise bei höheren Kräften, auch entfallen.

Beispielsweise ist ein Zwischenraum 422 in Figur 2 mit einem O-Ring oder einer Zylindermantel-förmigen Dichtung versehen und stellt so den Raum 420 bereit, dessen einzige Öffnung nach außen die distale Öffnung 102 ist. Alternativ oder zusätzlich fungiert der Zwischenraum 422 als Gleitführung und Zentrierung zwischen dem ersten Abschnitt 100 und dem zweiten Abschnitt 200 und kann so zur Aufnahme von radialen Kräften dienen.

Die starre Verbindung zwischen der ersten Verbindungsschnittstelle 110 und der zweiten Verbindungsschnittstelle 210 ist lösbar. Wie im Beispiel gezeigt ist die voran genannte starre Verbindung als Schraubverbindung ausgeführt, wobei ein Außengewinde im Sinne der zweiten Schnittstelle 210 des zweiten Abschnitts 200 in ein Innengewinde im Sinne der ersten Schnittstelle 110 des ersten Abschnitts 100 eingreift.

Der zweite Abschnitt 200 ist abschnittsweise in dem ersten Abschnitt 100 aufgenommen. Der erste Abschnitt 100 umgibt den zweiten Abschnitt 200 also abschnittsweise. Die erste Verbindungsschnittstelle 110 des ersten Abschnitts 100 ist in radialer Richtung in Bezug zur Stellachse zwischen der Antriebsschnittstelle 130 des ersten Abschnitts 100 und der zweiten Verbindungsschnittstelle 210 des zweiten Abschnitts 200 angeordnet.

Der Prozessarmatur-Antrieb 300 umfasst eine zur Antriebsstange 10 rotierbare Mutter 310, wobei die Antriebsschnittstelle 130 und die Mutter 310 wenigstens eine gemeinsam Laufrille für Kugeln definieren, wobei wenigstens ein Rückführkanal für die Kugeln zwischen Enden der wenigstens einen Laufrille innerhalb der rotierbaren Mutter 310 ausgeführt ist.

Im Beispiel ist eine Kugelumlaufmutter gezeigt. Selbstverständlich kann die Antriebsstange 10 auch mittels eines Trapenzgewindes oder anderweitig zur Bewegung entlang der Stellachse angetrieben werden.

Figur 3 zeigt den zweiten Abschnitt 200 in einer Seitenansicht. Der zweite Abschnitt 200 weist in seinem Verlauf eine Materialverjüngung 240 auf, wobei der wenigstens eine Sensor 400 im Bereich der Materialverjüngung 240 angeordnet ist.

Der zweite Abschnitt 200 umfasst zumindest abschnittsweise, insbesondere im Bereich der Materialverjüngung 240, zwei freistehende Seitenleisten 242a-b und einen zwischen den Seitenleisten 242a-b angeordneten Nutengrund 244. Der Nutengrund 244 wird beispielsweise von einer zweier sich gegenüberliegende Nuten im zweiten Abschnitt bereitgestellt. Der Sensor 400 ist auf dem Nutengrund 244 insbesondere auf der Oberfläche des Nutengrunds 244 angeordnet.

An die jeweilige Seitenleiste 242a-b schließt sich wenigstens eine Tasche an, die eine weitere Materialverjüngung zur Verbesserung des Messbereichs des wenigstens einen Sensors 400 bewirken. Insbesondere ist die jeweilige Seitenleiste 242a-b von zwei Taschen umgeben.

Die Seitenleisten 242a-b verlaufen im gezeigten Beispiel in einer ersten räumlichen Orientierung wie auch der Nutengrund 244.

Wenigstens eine Nutenwandung, die eine Nut mit dem Nutengrund 244 begrenzt verläuft in einer zweiten räumlichen Orientierung. Die erste und zweite räumliche Orientierung sind insbesondere orthogonal zueinander.

Die Seitenleisten 242a-b erstrecken sich parallel zur Stellachse S über einen Bereich, in dem auch der wenigstens eine Sensor 400 angeordnet ist.

Der wenigstens eine Sensor 400 ist beispielsweise als Dehnungsmessstreifen ausgebildet und auf der Oberfläche des Nutengrunds 244 angeordnet.

In einem Beispiel sind zwei Sensoren 400 vorgesehen, wobei der erste Sensor 400 auf dem Nutengrund 244 angeordnet ist und der zweite Sensor auf einem dem Nutengrund 244 gegenüberliegenden weiteren Nutengrund angeordnet ist. Bei einer Anordnung ohne Nutengrund sind die beiden Sensoren 400 auf der Oberfläche des zweiten Abschnitts 200 angeordnet.

Die Anordnung mit einem einigen Sensor ist dann sinnvoll, wenn Messfehler toleriert werden. Die Anordnung mit zwei sich gegenüberliegenden Sensoren ist vorteilhaft, da mitgemessene Querkräfte durch einfach Mittelwertbilderung der erzeugen Sensorsignale bzw. daraus abgeleiteter Kräfte sich bei der Mittelwertbildung gegenseitig aufheben.

Wenigstens eine Signalleitung 410 kontaktiert den wenigstens einen Sensor 400 elektrisch. Die wenigstens eine Signalleitung ist an der distalen Öffnung 102 des ersten Abschnitts 100 herausgeführt. Die wenigstens eine Signalleitung 410 ist abschnittsweise innerhalb einer ersten Durchgangsöffnung 104 des ersten Abschnitts 100 und abschnittsweise innerhalb einer zweiten Durchgangsöffnung 202 des zweiten Abschnitts 200 angeordnet.

Lotrecht zur Stellachse S verläuft eine Durchgangsöffnung 224, in welche die Durchgangsöffnung 202 auf der Sensorseite mündet, und in welcher der Nutengrund 244 endet. Die Signalleitung 410 ist beispielsweise im Bereich der Durchgangsöffnung 224 terminiert und elektrisch mit dem wenigstens einen Sensor 400 kontaktiert.

Die zweite Durchgangsöffnung 202 des zweiten Abschnitts 200 ist in Bezug zur Stellachse S radial innerhalb der zweiten Verbindungsschnittstelle 210 angeordnet. Die erste Verbindungsschnittstelle 110 des ersten Abschnitts 100 ist in Bezug zur Stellachse S radial innerhalb der Antriebsschnittstelle 130 angeordnet.

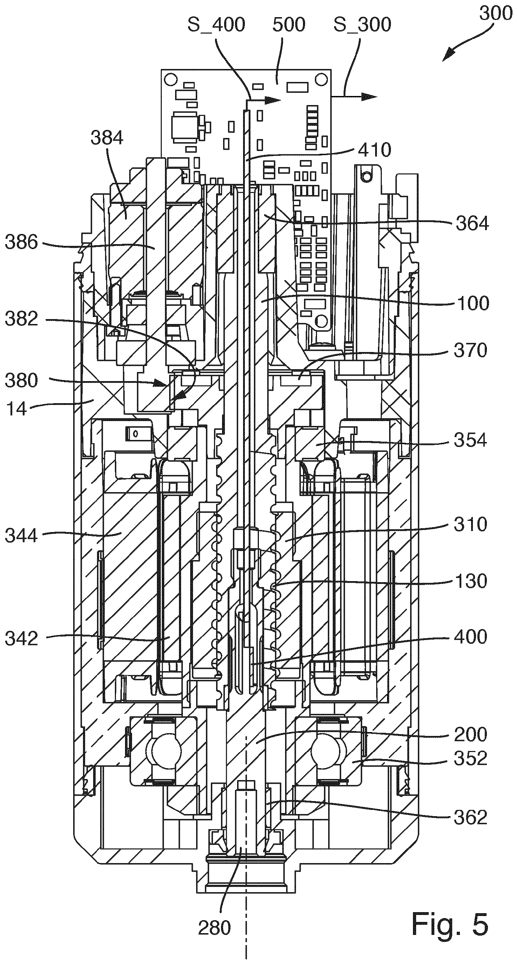

Figur 5 zeigt einen schematischen Schnitt des Prozessarmatur-Antriebs 300. Die rotierbare Mutter 310 ist Teil eines Rotors 342 eines Elektromotors, wobei der Rotor 342 zwischen der Antriebsstange 10 und einem Stator 344 des Elektromotors angeordnet ist.

Die Antriebsstange 10 ist zu deren linearer Bewegung entlang der Stellachse S an dem Gehäuse 14 mittels zweier voneinander beabstandeter Lagerabschnitte 362 und 364 gelagert. Die Lagerabschnitte 352 und 354 befinden sich zwischen den Lagerabschnitten 362 und 364.

Ein rotierbarer Sensorabschnitt 370 ist mit dem Rotor 310 starr verbunden. Der rotierbare Sensorabschnitt 370 ist mit einem Dauermagneten versehen, wobei ein feststehender, nicht gezeigter Sensorabschnitt das durch die Rotation entstehende wechselnde Magnetfeld registriert und ein Drehsignal zur Positionserkennung erzeugt.

Ein rotierbarer Zahnkranz 380 ist mit dem Rotor 310 starr verbunden. Der Zahnkranz greift in ein Zahnrad 382 einer mit einer Bremse 384 verbundenen Welle 386 ein. Mit der Bremse 384 wird sichergestellt, dass bei inaktivem elektrischem Antrieb die Antriebsposition nicht verändert wird.

Eine auf wenigstens einer Leiterplatte realisierte Steuereinheit 500 wertet das Signal S_400 aus und betreibt in Abhängigkeit von dem Signal S_400 den Elektroantrieb. Insbesondere wird der Stator 344 angesteuert.

Ein beispielhaftes Verfahren zum Betreiben der Prozessarmatur 2 umfasst ein Ermitteln eines Ansteuersignals S_300 in Abhängigkeit von dem wenigstens einen Signal S_400, welches die auf den zweiten Abschnitt 200 entlang der Stellachse S wirkende Kraft charakterisiert, und in Abhängigkeit von wenigstens einem vorgegebenen Soll-Wert, insbesondere einem Soll-Wert für die Kraft auf den wenigstens zweiten Abschnitt 200. Das Verfahren umfasst ein Betreiben des Prozessarmatur-Antriebs 300 in Abhängigkeit von dem ermittelten Ansteuersignal S_300.

## Patentansprüche

1. Eine Antriebsstange (10) für einen Prozessarmatur-Antrieb (300) umfassend:
wenigstens einen ersten Abschnitt (100) umfassend eine Antriebsschnittstelle (130), mittels welcher wenigstens ein Teil einer von dem Prozessarmatur-Antrieb (300) ausgehenden Antriebskraft in die Antriebsstange (10) zu deren Bewegung entlang einer Stellachse (S) einbringbar ist, und umfassend eine erste Verbindungsschnittstelle (110); und
wenigstens einen zweiten Abschnitt (200) umfassend eine zweite Verbindungsschnittstelle (210), wobei die zweite Verbindungsschnittstelle (210) gemeinsam mit der ersten Verbindungsschnittstelle (110) zur starren Befestigung des wenigstens einen zweiten Abschnitts (200) an dem wenigstens einen ersten Abschnitt (100) eingerichtet ist, und wobei der wenigstens eine zweite Abschnitt (200) wenigstens einen Sensor (400) umfasst, welcher dazu eingerichtet ist, ein Signal (S_400) zu erzeugen, welches eine auf den wenigstens einen zweiten Abschnitt (200) entlang der Stellachse (S) wirkende Kraft charakterisiert.

2. Die Antriebsstange (10) gemäß dem Anspruch 1, wobei der zweite Abschnitt (200) der Antriebsstange (10) eine dritte Verbindungsschnittstelle (280) umfasst, welche zur kraftführenden Verbindung des zweiten Abschnitts (200) mit einem Absperrkörper (4) der Prozessarmatur (2), mit einem Kompressor bzw. Druckstück der Prozessarmatur (2) oder mit einem weiteren Abschnitt der Antriebsstange (10) eingerichtet ist, und wobei der Sensor (400) im Kraftweg zwischen der zweiten Verbindungsschnittstelle (210) und der dritten Verbindungsschnittstelle (280) angeordnet ist.

3. Die Antriebsstange (10) gemäß einem der vorigen Ansprüche, wobei der zweite Abschnitt (200) in seinem Verlauf eine Materialverjüngung (240) aufweist, und wobei der wenigstens eine Sensor (400) im Bereich der Materialverjüngung (240) angeordnet ist.

4. Die Antriebsstange (10) gemäß einem der vorigen Ansprüche, wobei der zweite Abschnitt (200) zumindest abschnittsweise, insbesondere im Bereich der Materialverjüngung (240), einen Nutengrund (244) umfasst, wobei der Sensor (400) auf dem Nutengrund (244) angeordnet ist.

5. Die Antriebsstange (10) gemäß einem der vorigen Ansprüche, wobei wenigstens eine Signalleitung (410), welche den wenigstens einen Sensor (400) elektrisch kontaktiert und an einer distalen Öffnung (102) des ersten Abschnitts (100) herausgeführt ist, abschnittsweise innerhalb einer ersten Durchgangsöffnung (104) des ersten Abschnitts (100) und abschnittsweise innerhalb einer zweiten Durchgangsöffnung (202) des zweiten Abschnitts (200) angeordnet ist.

6. Die Antriebsstange (10) gemäß dem vorigen Anspruch, wobei die zweite Durchgangsöffnung (202) des zweiten Abschnitts (200) in Bezug zur Stellachse (S) radial innerhalb der zweiten Verbindungsschnittstelle (210) angeordnet ist.

7. Die Antriebsstange (10) gemäß einem der vorigen Ansprüche, wobei die erste Verbindungsschnittstelle (110) des ersten Abschnitts (100) in Bezug zur Stellachse (S) radial innerhalb der Antriebsschnittstelle (130) angeordnet ist.

8. Die Antriebsstange (10) gemäß einem der vorigen Ansprüche, wobei der wenigstens einen Sensor (400) in einem Raum (420) angeordnet ist, der ausgehend vom wenigstens einen Sensor (400) und wegweisend vom ersten Abschnitt (400) fluiddicht ausgebildet ist.

9. Die Antriebsstange (10) gemäß einem der vorigen Ansprüche, wobei die starre Verbindung zwischen der ersten Verbindungsschnittstelle (110) und der zweiten Verbindungsschnittstelle (210) lösbar ist.

10. Die Antriebsstange (10) gemäß einem der vorigen Ansprüche, wobei der zweite Abschnitt (200) abschnittsweise in dem ersten Abschnitt (100) aufgenommen ist.

11. Die Antriebsstange (10) gemäß einem der vorigen Ansprüche, wobei die erste Verbindungsschnittstelle (110) des ersten Abschnitts (100) lotrecht zur Stellachse (S) zwischen der Antriebsschnittstelle (130) des ersten Abschnitts (100) und der zweiten Verbindungsschnittstelle (210) des zweiten Abschnitts (200) angeordnet ist.

12. Ein Prozessarmatur-Antrieb (300) umfassend die Antriebsstange (10) gemäß einem der vorigen Ansprüche.

13. Der Prozessarmatur-Antrieb (300) gemäß dem Anspruch 12, wobei der Prozessarmatur-Antrieb (300) eine zur Antriebsstange (10) rotierbare Mutter (310) umfasst, wobei die Antriebsschnittstelle (130) und die Mutter (310) gemeinsame Laufrillen für Kugeln definieren, und wobei wenigstens ein Rückführkanal für die Kugeln innerhalb der rotierbaren Mutter (310) ausgeführt ist.

14. Der Prozessarmatur-Antrieb (300) gemäß dem Anspruch 13, wobei die rotierbare Mutter (310) Teil eines Rotors (342) eines Elektromotors ist, wobei der Rotor (342) zwischen der Antriebsstange (10) und einem Stator (344) des Elektromotors angeordnet ist.

15. Eine Prozessarmatur (2) umfassend den Prozessarmatur-Antrieb (300) gemäß einem der Ansprüche 12 bis 14.

16. Ein Verfahren zum Betreiben der Prozessarmatur (2) gemäß dem vorigen Anspruch, wobei das Verfahren umfasst:
Ermitteln eines Ansteuersignals (S_300) in Abhängigkeit von dem wenigstens einen Signal (S_400), welches die auf den zweiten Abschnitt (200) entlang der Stellachse (S) wirkende Kraft charakterisiert, und in Abhängigkeit von wenigstens einem vorgegebenen Soll-Wert, insbesondere einem Soll-Wert für die Kraft auf den wenigstens zweiten Abschnitt (200);
Betreiben des Prozessarmatur-Antriebs (300) in Abhängigkeit von dem ermittelten Ansteuersignal (S_300).
